(19) Europäisches Patentamt
European Patent Office
Office européen des brevets

(11) Publication number: **0 452 062 A2**

(12) **EUROPEAN PATENT APPLICATION**

(21) Application number: **91303065.6**

(22) Date of filing: **08.04.91**

(51) Int. Cl.⁵: **G02F 1/1335**

(30) Priority: **09.04.90 JP 93667/90**

(43) Date of publication of application:
**16.10.91 Bulletin 91/42**

(84) Designated Contracting States:
**DE FR GB IT**

(71) Applicant: **SEIKO EPSON CORPORATION**
**4-1, Nishishinjuku 2-chome**
**Shinjuku-ku Tokyo (JP)**

(72) Inventor: **Wada, Hiroshi**
**c/o Seiko Epson Corporation, 3-5 Owa 3-chome**
**Suwa-shi, Nagano-ken (JP)**

(74) Representative: **Caro, William Egerton et al**
**J. MILLER & CO. Lincoln House 296-302 High Holborn**
**London WC1V 7JH (GB)**

(54) **Liquid crystal display device.**

(57) A liquid crystal display device comprises a pair of polarising plates (1, 2) and a liquid crystal cell (4) having a pair of electrode plates (6a, 6b) and a twist oriented nematic liquid crystal material (7) interposed therebetween together with at least one layer (3) of an optically anisotropic material. The liquid crystal cell and the layer of optically anisotropic material are sandwiched between the polarising plates. The direction of the optical axis (R3) of the layer (3) of optically anisotropic material is set at an angle of 0° to 30° or 60° to 90° to a direction of observation (A-A').

EP 0 452 062 A2

Fig. 1

EP 0 452 062 A2

This invention relates to liquid crystal display devices.

A liquid crystal display device of the super twisted nematic (STN) type has a uni-axial optically anisotropic member (e.g. an oriented high polymer sheet) interposed between two polarising plates to improve display quality.

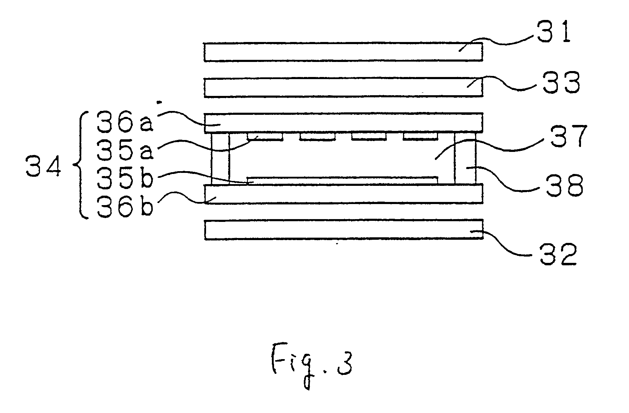

Figure 3 is a cross sectional view of such a conventional liquid crystal display device. As illustrated, an optically anisotropic member 33 and a liquid crystal cell 34 are sandwiched between upper and lower polarising plates 31, 32. The liquid crystal cell 34 consists of a nematic liquid crystal material 37 retained between an upper electrode base 36a having electrodes 35a formed on its lower surface and a lower electrode base 36b having electrodes 35b formed on its upper surface. The nematic liquid crystal material 37 is twist oriented by rubbing the opposed upper and lower electrode bases 36a, 36b. Spacers are interposed between the upper and lower electrode bases 36a, 36b to retain the nematic liquid crystal material 37 therebetween while maintaining a constant liquid crystal layer thickness.

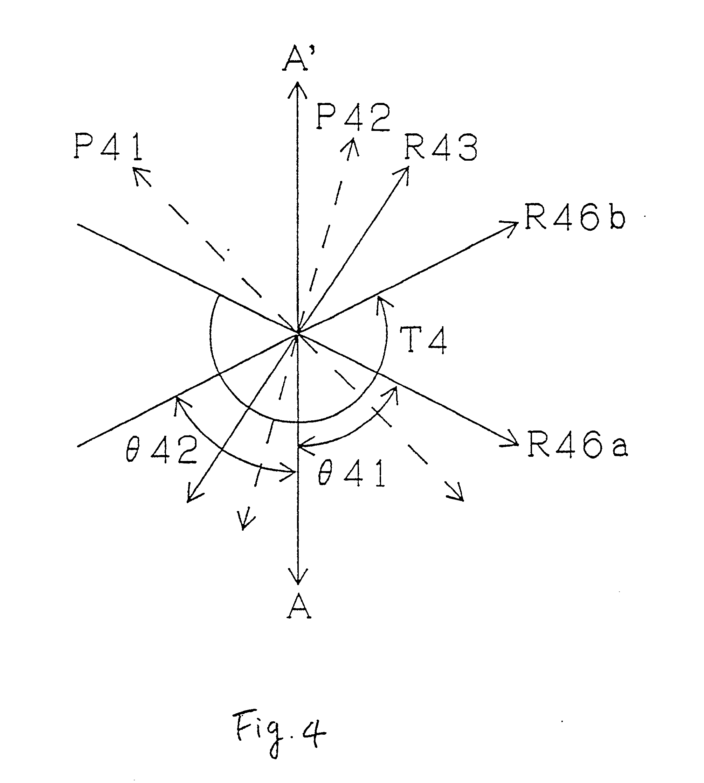

Figure 4 shows the relationship between the axes of the elements of the liquid crystal display device of Figure 3. In Figure 4, R46a and R46b respectively designate the rubbing directions of the upper electrode base 36a and the lower electrode base 36b, T4 designates the direction and angle of twist of the liquid crystal molecules in the liquid crystal cell 34 from top to bottom as viewed in Figure 3, P41 and P42 respectively designate the directions of the axes of polarisation of the upper and lower polarising plates 31, 32, the line A-A' represents the direction of observation, $\theta 41$ designates the angle between the direction of observation A-A' and the rubbing direction R46a of the upper electrode base 36a, and $\theta 42$ designates the angle between the direction of observation A-A' and the rubbing direction R46b of the lower electrode base 36b. The angles $\theta 41$ and $\theta 42$ are approximately equal to one another.

In a conventional liquid crystal display device of the type illustrated in Figure 3, the retardation value of the optically anisotropic member and the relationship between the axes, are set for the liquid crystal display device used in the STN mode so as to improve contrast and to enable black and white display. Although contrast has been improved in this manner to achieve a nearly full black and white display in comparison with ordinary STN devices, viewing angle characteristics have not been considered.

The present invention seeks to provide a liquid crystal display device having improved viewing angle characteristics as well as high black and white display contrast.

According to one aspect of the present invention there is provided a liquid crystal display device comprising: a pair of polarising plates; a liquid crystal cell having a pair of electrode plates and a twist oriented nematic liquid crystal material interposed therebetween; and at least one layer of an optically anisotropic material, the liquid crystal cell and layer or layers of optically anisotropic material being sandwiched between said polarising plates, characterised in that the direction of the optical axis of the or at least one of the layers of optically anisotropic material is set at an angle of 0° to 30° or 60° to 90° to a direction of observation.

In one embodiment there is a single layer of optically anisotropic material.

In another embodiment there are at least two layers of optically anisotropic material disposed between the liquid crystal cell and one of the polarising plates, the angle between the direction of observation and the direction of the optical axis of the layer of optically anisotropic material adjacent to the liquid crystal cell being 0° to 30° or 60° to 90°.

In a further embodiment at least one layer of optically anisotropic material is disposed between the liquid crystal cell and one of the polarising plates and at least one layer of optically anisotropic material is disposed between the liquid crystal cell and the other polarising plate, the angle between the direction of observation and the direction of the optical axis of at least one of said layers of optically anisotropic material being 0° to 30° or 60° to 90°.

According to another aspect of the present invention there is provided a liquid crystal display device comprising: a pair of polarising plates; a liquid crystal cell having a pair of electrode plates and a twist oriented nematic liquid crystal material interposed therebetween; and a plurality of layers of an optically anisotropic material, the liquid crystal cell and the layers of optically anisotropic material being sandwiched between said polarising plates, characterised in that at least one layer of optically anisotropic material is disposed between the liquid crystal cell and one of the polarising plates, and at least one layer of optically anisotropic substance is disposed between the liquid crystal cell and the other polarising plate, the angle between the direction of observation and the direction of a bisector between the optical axes of said layers of optically anisotropic substance adjacent to said liquid crystal cell being 0° to 30° or 60° to 90°.

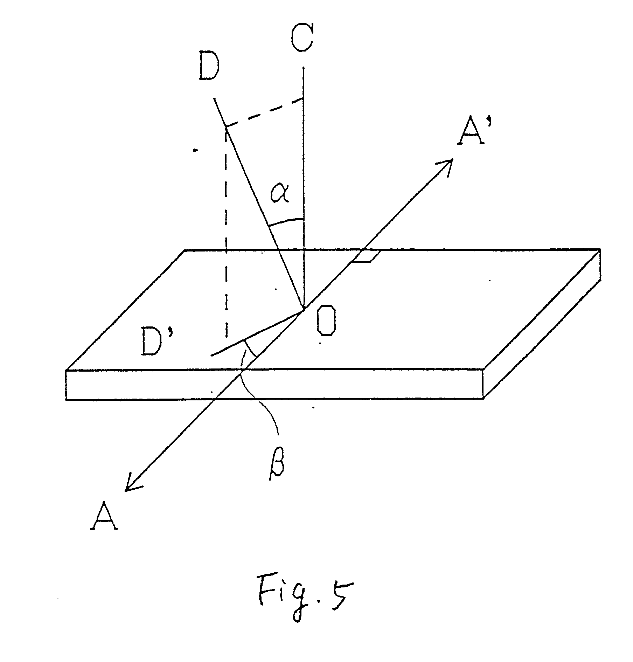

The direction of observation is defined as described below with reference to Figure 5. The direction of observation is a direction in which the display is viewed most frequently during use of the liquid crystal display device. Ordinarily, it coincides with the direction A-A' perpendicular to the lengthwise direction of the liquid crystal display device, as shown in Figure 5. In Figure 5, a designates the angle between a direction OC perpendicular to the plane of the liquid crystal display device and a viewing direction OD, and $\beta$ designates the angle between

3

a direction of observation A-A' and the direction of viewing OD' on the plane of the liquid crystal display device.

The invention is illustrated, merely by way of example, in the accompanying drawings, in which:-

Figure 1 is a schematic cross sectional view of one embodiment of a liquid crystal display device according to the present invention;

Figure 2 is a diagram of the relationship between various axes of the liquid crystal display device of Figure 1;

Figure 3 is a schematic cross sectional view of a conventional liquid crystal display device;

Figure 4 is a diagram of the relationship between various axes of the conventional liquid crystal display device of Figure 3;

Figure 5 is a diagram explaining direction of observation;

Figure 6 is a diagram of equal contrast curves of Example 1;

Figure 7 is a schematic cross sectional view of another embodiment of a liquid crystal display device according to the present invention;

Figure 8 is a diagram of the relationship between various axes of the liquid crystal display device of Figure 7;

Figure 9 is a schematic cross sectional view of a third embodiment of a liquid crystal display device according to the present invention; and

Figure 10 is a diagram of the relationship between various axes of the liquid crystal display device of Figure 9.

Throughout the drawings like parts have been designated by the same reference numerals.

It is desirable that, in a liquid crystal display device, display viewing angle characteristics are such that the viewing angle on the front left side and the front right side with respect to the direction of observation are approximately equal to each other, and that the ranges of viewing angles are generally uniform in the horizontal direction. Examination was made of a liquid crystal cell and a layer of optically anisotropic substance sandwiched between two polarising plates. The purpose of the examination was to see how the viewing angle characteristics were influenced by the directions of the polarising axes of the polarising plates, the rubbing directions of the liquid crystal cell, and the angles between the axes, by using equal contrast curves (the relationship between values of the angles a and $\beta$ shown in Figure 5, at which a given contrast is obtained). It was found from this examination that the direction of the centre line on which equal contrast curves are generally symmetric, approximately coincides with the direction of the optical axis of the optically anisotropic member.

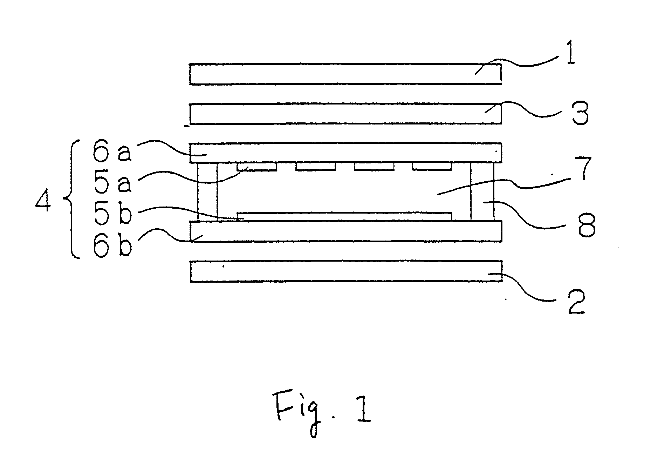

Figure 1 shows schematically a cross section of one embodiment of a liquid crystal display device according to the present invention. An optically anisotropic member 3 and a liquid crystal cell 4 are sandwiched between upper and lower polarising plates 1, 2. The liquid crystal cell 4 comprises a nematic liquid crystal material 7 retained between an upper electrode base 6a having electrodes 5a formed on its lower surface and a lower electrode base 6b having electrodes 5b formed on its upper surface. The nematic liquid crystal 7 is twist oriented by rubbing the opposed upper and lower electrode bases 6a, 6b. Spacers 8 are interposed between the upper and lower electrode bases 6a, 6b to retain the nematic liquid crystal 7 therebetween while maintaining a constant liquid crystal layer thickness. Spacing maintaining members such as glass fibres or glass balls may be disposed between the electrode bases 6a, 6b in order to maintain the liquid crystal layer thickness constant.

The means for orienting liquid crystal molecules of a liquid crystal display device according to the present invention is not limited to rubbing. However, for convenience, the direction in which the major axes of the liquid crystal molecules adjacent to each of the electrode bases will hereinafter be referred to as "the rubbing direction". A polycarbonate member uni-axially orientated is used as the optically anisotropic member 3 which will hereinafter be referred to as "the phase difference plate".

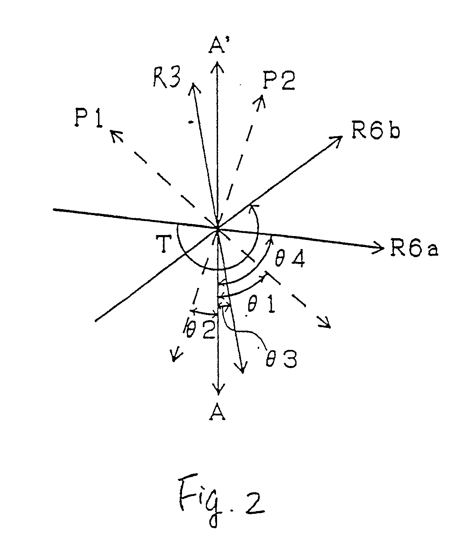

Figure 2 shows the relationship between the axes of the elements of the liquid crystal display device shown in Figure 1. In Figure 2, R6a, R6b respectively designate the rubbing directions of the upper electrode base 6a and the lower electrode base 6b, T designates the direction and angle of twist of the liquid crystal molecules in the liquid crystal cell 4 from top to bottom as viewed in Figure 1, P1 and P2 respectively designate the directions of the axes of polarisation of the upper and lower polarising plates 1, 2, the line A-A' represents the direction of observation, $\theta 1$ designates the angle between the direction of observation A-A' and the direction P1 of the polarisation axis of the upper polarising plate 1, $\theta 2$ designates the angle between the direction of observation A-A' and the direction P2 of the polarisation axis of the lower polarising plate 2, $\theta 3$ designates the angle between the direction of observation A-A' and the direction R3 of the optical axis of the phase difference plate 3, and $\theta 4$ designates the angle between the direction of observation A-A' and the rubbing direction R6a of the upper electrode base 6a. It is assumed that the value of each angle $\theta 1$, $\theta 2$, $\theta 3$, $\theta 4$ is positive when measured clockwise from the direction of observation A-A'.

The polarisation axes are used in this embodiment of the present invention but similar effects can also be obtained when absorption axes are used as an alternative.

The liquid crystal display device of Figure 1 will be described with respect to a negative display mode (in which the display is dark when no voltage is applied across the electrodes 5a, 5b and bright when a voltage is applied). However, the same effects can be obtained in a positive display mode (in which the display is bright when no voltage is applied across the electrodes 5a, 5b, and dark when a voltage is applied). The refractive index anisotropy $\Delta n$ of the phase difference plate 3 is defined as $\Delta nf$, and the thickness of the phase difference plate is defined as $df$.

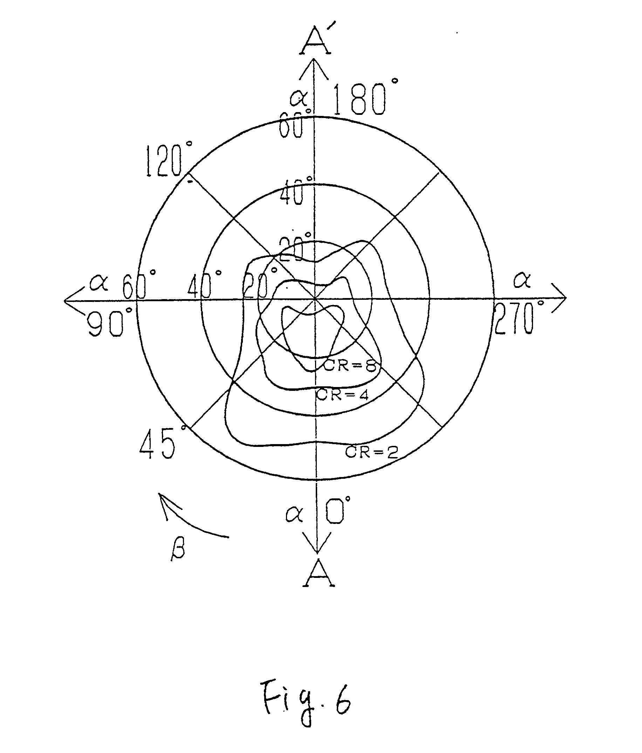

When in a liquid crystal display device shown in Figure 1 the product $\Delta n \cdot d$ of the refractive index anisotropy $\Delta n$ of the liquid crystal material 7 of the liquid crystal cell 4 and the thickness $d$ of the layer of the liquid crystal material 7 is 0.9 $\mu$m, the liquid crystal material is twisted counter-clockwise by a twist angle T = 240°, the product $\Delta nf \cdot df$ of the refractive index anisotropy $\Delta nf$ and the thickness $df$ of the phase difference plate 3 is 0.55 $\mu$m, $\theta 1$ = -45°, $\theta 2$ = -15°, $\theta 3$ = 0° and $\theta 4$ = 90°, equal contrast curves such as those shown in Figure 6 are exhibited. These curves are symmetric with respect to the direction of observation A-A', and the display is easy to view under these conditions. Table 1 shows Examples 1 to 10 of the present invention together with Comparative Examples 1 to 3, Example 1 satisfying the above conditions.

## TABLE 1

| | | Twist-ing Angle T | $\Delta n \cdot d$ of liquid crystal | $\Delta nf \cdot df$ of phase differ-ence plate | $\theta 1$ | $\theta 2$ | $\theta 3$ | $\theta 4$ | Con-trast symme-try |
|---|---|---|---|---|---|---|---|---|---|
| Examples of the invention | 1 | 240° left | 0.90 $\mu$m | 0.55 $\mu$m | -45° | -15° | 0° | 90° | ◎ |
| | 2 | ↑ | ↑ | ↑ | -30° | 0° | 15° | -75° | ◎ |
| | 3 | ↑ | ↑ | ↑ | -15° | -15° | 30° | -60° | ○ |
| | 4 | ↑ | ↑ | ↑ | -75° | -45° | -30° | 60° | ○ |
| | 5 | ↑ | 0.85 $\mu$m | 0.60 $\mu$m | -45° | -15° | 0° | 80° | ◎ |
| | 6 | ↑ | ↑ | ↑ | -40° | -15° | 10° | 90° | ◎ |
| | 7 | ↑ | 0.80 $\mu$m | 0.55 $\mu$m | -45° | -15° | 0° | 90° | ◎ |
| | 8 | 180° left | 0.85 $\mu$m | 0.55 $\mu$m | -45° | -40° | 0° | 90° | ◎ |
| | 9 | 230° left | 0.85 $\mu$m | 0.55 $\mu$m | -50° | -5° | 0° | 75° | ◎ |
| | 10 | ↑ | ↑ | ↑ | -70° | -25° | -20° | 55° | ○ |
| Comparative examples | 1 | 240° left | 0.90 $\mu$m | 0.55 $\mu$m | -10° | 20° | 35° | -55° | ✕ |
| | 2 | ↑ | ↑ | ↑ | -80° | -40° | -35° | 55° | ✕ |
| | 3 | 230° left | 0.85 $\mu$m | 0.55 $\mu$m | -85° | -40° | -35° | 40° | ✕ |

In Table 1, symbols ◎, ○, ✕ are used to indicate whether or not the contrast curves are generally symmetrical with respect to the direction of observation so that the display is easy to view: ◎ indicates that the result is very good, O indicates that it is good, and X indicates that it is poor.

As will be appreciated from Table 1, to realise an easy to view display in which the contrast distribution is generally symmetric with respect to the direction of observation A-A', it is desirable to set the angle θ3 between the direction of the optical axis of the phase difference plate 3 and the direction of observation A-A' to between 0° to 30°.

To obtain a display in which the axis of symmetry coincides with a direction perpendicular to the direction of observation A-A', Examples 11 to 12 are provided in Table 2. Table 2 also shows Comparative Examples 4 to 6.

## TABLE 2

| | | Twisting Angle T | Δn·d of liquid crystal | Δnf·df of phase difference plate | θ1 | θ2 | θ3 | θ4 | Contrast symmetry |
|---|---|---|---|---|---|---|---|---|---|
| Examples of the invention | 11 | 240° left | 0.90 μm | 0.55 μm | 45° | 75° | 90° | 0° | ◎ |
| | 12 | ↑ | ↑ | ↑ | 60° | 90° | −75° | 15° | ◎ |
| | 13 | ↑ | ↑ | ↑ | 75° | 15° | −60° | + 3° | O |
| | 14 | ↑ | ↑ | ↑ | 15° | 45° | 60° | −10° | O |
| | 15 | ↑ | 0.85 μm | 0.60 μm | 45° | 75° | 90° | −10° | ◎ |
| | 16 | ↑ | ↑ | ↑ | 50° | 75° | −80° | 0° | ◎ |
| | 17 | ↑ | 0.80 μm | 0.55 μm | 45° | 75° | 90° | 0° | ◎ |
| | 18 | 180° left | 0.85 μm | 0.55 μm | 45° | −50° | 90° | 0° | ◎ |
| | 19 | 230° left | 0.85 μm | 0.55 μm | 40° | 85° | 90° | −15° | ◎ |
| | 20 | ↑ | ↑ | ↑ | 20° | 75° | 70° | −35° | O |
| Comparative examples | 4 | 240° left | 0.90 μm | 0.55 μm | 80° | −20° | −55° | −35° | X |
| | 5 | ↑ | ↑ | ↑ | 10° | 50° | 55° | −35° | X |
| | 6 | 230° left | 0.85 μm | 0.55 μm | 5° | 40° | 55° | −50° | X |

As in Table 1, in Table 2 symbols ◎, O, X are used to indicate whether or not the contrast curves are generally symmetrical with respect to a centre line perpendicular to the direction of observation; ◎ indicates that the result is very good; O indicates that it is good, and X indicates that it is poor.

As will be appreciated from Table 2, to realise an easy to view display in which the contrast distribution is generally symmetric with respect to the line perpendicular to the direction of observation A-A', it is desirable to set the angle θ3 between the direction of the optical axis of the phase difference plate 3 and the direction of observation to 60° to 90°.

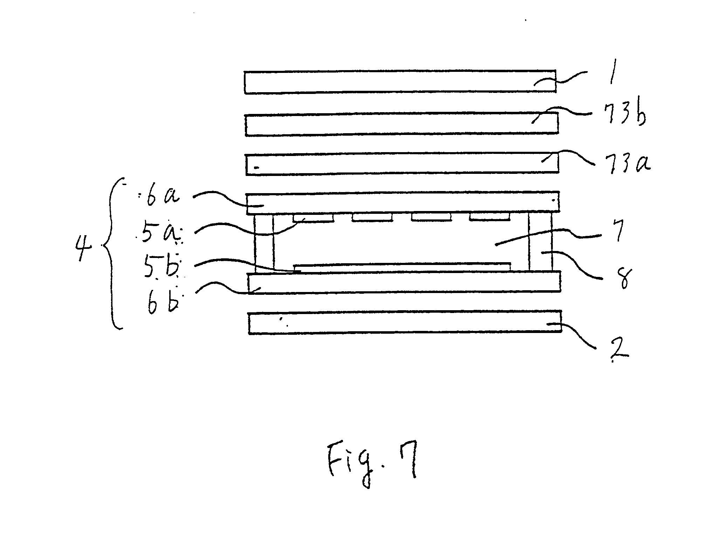

Figure 7 illustrates schematically another embodiment of a liquid crystal display device according to the present invention. Two phase difference plates 73a, 73b are interposed between the liquid crystal cell 4 and the upper polarising plate 1, the phase difference plate 73a being adjacent to the liquid crystal cell 4 and the phase difference plate 73b being adjacent the polarising plate 1.

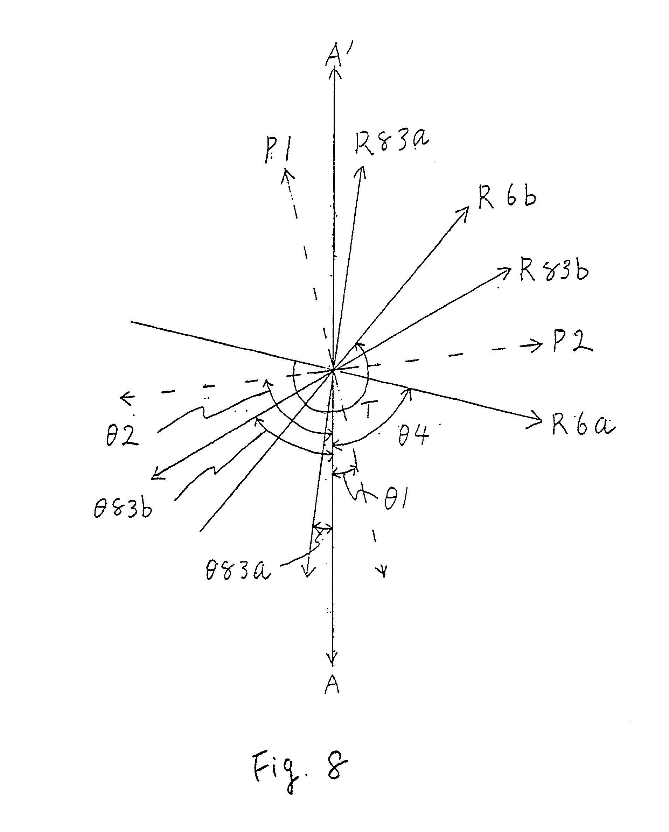

Figure 8 shows the relationship between the axes of the elements of the liquid crystal display device of Figure 7. The direction R83a of the optical axis of the phase difference plate 73a is at an angle $\theta83a$ to the direction of observation A-A', and the direction $\theta83b$ of the optical axis of the phase difference plate 73b is at an angle $\theta83b$ to the observation direction A-A'. Table 3 shows Examples 21 and 22 of liquid crystal display devices according to this embodiment of the present invention.

## TABLE 3

| | | Twist-ing Angle T | Δn·d of liquid crystal | Δnf·df of phase differ-ence plate 73a | Δnf·df of phase differ-ence plate 73b | θ1 | θ2 | θ83a | θ83b | θ4 | Con-trast sym-metry |
|---|---|---|---|---|---|---|---|---|---|---|---|
| Examples | 21 | 240° left | 0.90 μm | 0.40 μm | 0.45 μm | −20° | 70° | 0° | 50° | −80° | ◎ |
| | 22 | 240° left | 0.90 μm | 0.42 μm | 0.42 μm | 0° | 90° | 30° | 70° | −70° | ○ |

With respect to Example 21, the relationship between the axes of Figure 8 is as follows: $\Delta n\cdot d$ of the liquid crystal cell 4 is 0.90 μm, the liquid crystal material is twisted counter-clockwise by a twist angle T = 240°, $\Delta nf\cdot df$ of the phase difference plate 73a is 0.40 μm, $\Delta nf\cdot df$ of the phase difference plate 73b is 0.45 μm, $\theta1 = -20°$, $\theta2 = -70°$, $\theta83a = 0°$, $\theta83b = 50°$, and $\theta4 = -80°$. Under these conditions, equal contrast curves are generally symmetric with respect to the direction of observation A-A', and the display is easy to view. The liquid crystal display device of Example 22 is also sufficiently easy to view, although the degree of symmetry of the equal contrast curves is slightly lower than that of Example 21.

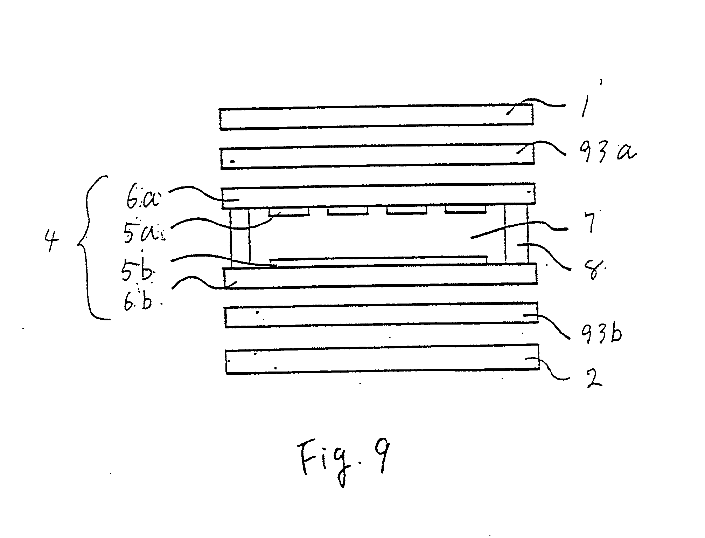

Figure 9 illustrates a third embodiment of a liquid crystal display device according to the present invention. This liquid crystal display device comprises an upper phase difference plate 93a interposed between the liquid crystal cell 4 and the upper polarising plate 1, while a lower phase difference plate 93b is interposed between the liquid crystal cell 4 and the lower polarising plate 2.

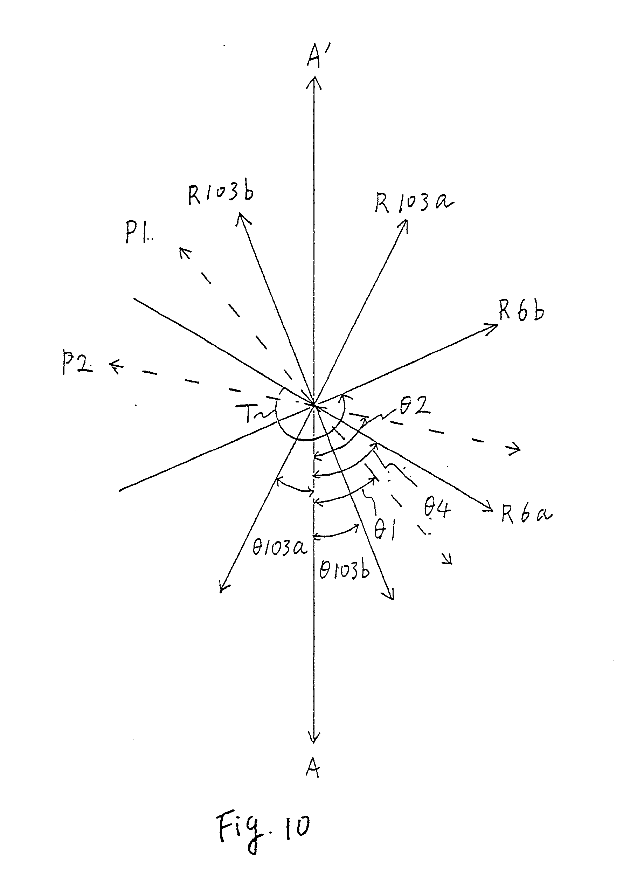

Figure 10 shows the relationship between the axes of the elements of the liquid crystal display device of Figure 9. The direction R103a of the optical axis of the upper phase difference plate 93a is at an angle $\theta103a$ from the direction of observation A-A', and the direction R103b of the optical axis of the lower phase difference plate 93b is at an angle of $\theta103b$ from the direction of observation A-A'. Table 4 shows Examples 23 and 24 of this display device.

7

## TABLE 4

| | | Twist-ing Angle T | Δn·d of liquid crystal | Δnf·df of phase differ-ence plate 103a | Δnf·df of phase differ-ence plate 103b | θ1 | θ2 | θ103a | θ103b | θ4 | Con-trast sym-metry |
|---|---|---|---|---|---|---|---|---|---|---|---|
| Examples | 23 | 240° left | 0.90 μm | 0.42 μm | 0.42 μm | -10° | -80° | 30° | -30° | -60° | ◎ |
| | 24 | 260° left | 0.85 μm | 0.40 μm | 0.40 μm | 0° | 90° | 40° | -40° | -50° | ◎ |

With respect to Example 23, the relationship between the axes is as follows: Δ $n·d$ of the liquid crystal cell 4 is 0.90 μm, the liquid crystal material is twisted counter-clockwise by a twist angle T = 240°, Δ $nf·df$ of the upper phase difference plate 93a is 0.42 μm, Δ $nf·df$ of the lower phase difference plate 93b is 0.42 μm, θ1 = -10°, θ2 = -80°, θ103a = 30°, θ103b = -30° and θ4 = -60°. Under these conditions, equal contrast curves are generally symmetric with respect to the direction of observation and the display is easy to view. In the case of Example 24 shown in Table 4, equal contrast curves are generally symmetric so that the display is also easy to view.

From these results, it will be appreciated that where a plurality of phase difference plates are disposed on one side of the liquid crystal cell, equal contrast curves are symmetric so that the display is easy to view if at least the angle between the direction of observation and the direction of the optical axis of the phase difference plate adjacent to the liquid crystal cell is set to 0° to 30° or 60° to 90°.

It will also be appreciated that where at least one phase difference plate is disposed on either side of the liquid crystal cell, equal contrast curves are symmetric so that the display is easy to view if the angle between the direction of observation and the direction of a bisector between the directions of the optical axes of the phase difference plates adjacent to the liquid crystal cell is set to 0° to 30° or 60° to 90°.

The material of the optically anisotropic member 3 in a liquid crystal display device according to the present invention is not limited to polycarbonate, and it may be formed by uni-axially stretching a sheet of material selected from monomers or polymers of diacetyle cellulose, polyamide, polyimide, polyether sulphone, polysulphone, polyolefin, polyethylene, polyethylene tetraphthalate, polyvinyl alcohol, acryl and polymethyl methacrylate.

## Claims

1. A liquid crystal display device comprising: a pair of polarising plates (1, 2); a liquid crystal cell (4) having a pair of electrode plates (6a, 6b) and a twist oriented nematic liquid crystal material (7) interposed therebetween; and at least one layer (3; 73a, 73b; 93a, 93b) of an optically anisotropic material, the liquid crystal cell and layer or layers of optically anisotropic material being sandwiched between said polarising plates, characterised in that the direction of the optical axis (R3; R83a, R83b; R103a, R103b) of the or at least one of the layers of optically anisotropic material is set at an angle of 0° to 30° or 60° to 90° to a direction of observation (A-A').

2. A liquid crystal display device as claimed in claim 1 characterised in that there is a single layer (3) of optically anisotropic material.

3. A liquid crystal display device as claimed in claim 1 characterised in that there are at least two layers (73a, 73b) of optically anisotropic material disposed between the liquid crystal cell (4) and one of the polarising plates (1, 2), the angle between the direction of observation (A-A') and the direction of the optical axis (R83a) of the layer (73a) of optically anisotropic material adjacent to the liquid crystal cell being 0° to 30° or 60° to 90°.

4. A liquid crystal display device as claimed in claim 1 characterised in that at least one layer (93a) of optically anisotropic material is disposed between the liquid crystal cell (4) and one of the polarising plates (1) and at least one layer (93b) of optically anisotropic material is disposed between the liquid crystal cell (4) and the other polarising plate (2), the angle between the direction of observation (A-A') and the direction of the optical axis (R103a, R103b) of at least one of said layers of optically anisotropic material being 0° to 30° or 60° to 90°.

5. A liquid crystal display device comprising: a pair of polarising plates (1, 2); a liquid crystal cell (4) having a pair of electrode plates (6a, 6b) and a twist oriented nematic liquid crystal material (7) interposed therebetween; and a plurality of layers (93a, 93b) of an optically anisotropic material, the liquid crystal cell and the layers of optically anisotropic material being sandwiched between said polarising plates, characterised in that at least one layer (93a) of optically anisotropic material is disposed between the liquid crystal cell (4) and one of the polarising plates (1), and at least one layer (93b) of optically anisotropic substance is disposed between the liquid crystal cell (4) and the other polarising plate (2), the angle between the direction of observation (A-A') and the direction of a bisector between the optical axes (R103a, R103b) of said layers of optically anisotropic substance adjacent to said liquid crystal cell being 0° to 30° or 60° to 90°.

Fig. 1

Fig. 2

31
33
36a
34 { 35a      37
     35b      38
     36b
32

Fig. 3

Fig. 4

Fig. 5

Fig. 6

Fig. 7

Fig. 8

Fig. 9

Fig. 10